# FASCICULE DE BREVET EUROPEEN

(11) **EP 1 646 792 B1**
(45) Date de publication et mention de la délivrance du brevet: **31.12.2008**
(21) Numéro de dépôt: 03758182.4
(22) Date de dépôt: 22.07.2003
(51) Int. Cl.: F16B 5/06

(54) **PROFILE POUR LA FIXATION D'UNE TOILE TENDUE**
PROFILLEISTE ZUR BEFESTIGUNG EINES GESPANNTEN TUCHS
PROFILE FOR FIXING A TENSIONED CLOTH

(43) Date de publication de la demande: 19.04.2006
(73) Titulaire: Isermatic Systemes, 38150 Roussillon (FR)
(72) Inventeur: JACQUET, Gilles, F-38550 Auberives sur Vareze (FR)
(74) Mandataire: Le Cacheux, Samuel L.R.
(86) Numéro de dépôt international: PCT/FR2003/002316
(87) Numéro de publication internationale: WO 2005/019660

(56) Documents cités:
- WO-A-98/32324
- DE-A- 3 822 818
- FR-A- 2 575 243
- FR-A- 2 840 964
- US-A- 4 410 027
- US-A- 4 916 767

## Description

La présente invention concerne le domaine technique des dispositifs utilisés pour le support d'une toile ou d'une bâche tendue, décorative ou publicitaire tel que décrit par exemple dans le document DE 3822818.

Dans le domaine ci-dessus, il est connu de mettre en oeuvre, pour réaliser un panneau décoratif ou publicitaire, une structure porteuse pourvue d'au moins une gorge périphérique dans laquelle est engagée une baguette, afin d'y bloquer une toile ou une bâche tendue qui se trouve disposée à l'intérieur de la gorge, interposée entre cette dernière et la baguette d'immobilisation.

Une telle structure porteuse, constitutive d'un panneau décoratif ou publicitaire, a notamment été décrite par le brevet EP 0 326 487.

Selon ce document, la baguette est constituée par un ou plusieurs tronçons d'un profilé qui comprend une âme à partir de laquelle s'étendent au moins deux ailes élastiquement déformables, sensiblement parallèles entre elles et distantes l'une de l'autre. L'âme présente une largeur supérieure à celle de l'ouverture de la gorge périphérique et les ailes élastiques présentent, également, une largeur maximale supérieure à celle de cette ouverture, afin de venir se coincer dans la gorge périphérique.

Un tel profilé permet, effectivement, d'assurer l'immobilisation d'une bâche ou toile dans la gorge périphérique de la structure porteuse.

Toutefois, il est apparu, à l'usage, que ce profilé ne permet pas, dans certaines circonstances, d'assurer une fixation de la bâche tendue présentant une résistance suffisante à l'arrachement. Or, ce manque de résistance à l'arrachement, peut apparaître rédhibitoire dans certaines configurations d'utilisation, notamment lors de la fixation de bâches de grandes dimensions qui peuvent se trouver soumises à des efforts relativement importants lorsqu'elles sont placées en extérieur et qu'elles doivent subir les intempéries, le vent notamment.

Il est donc apparu le besoin de disposer d'un profilé qui soit à même d'offrir une résistance à l'arrachement plus importante que celle offerte par le profilé d'immobilisation selon l'art antérieur.

A cet effet, un brevet US 5 076 033 a proposé un profilé pour l'immobilisation d'une toile, bâche ou analogue dans une gorge d'une structure porteuse, le profilé comprenant une âme à partir de laquelle s'étendent au moins deux ailes élastiquement déformables, sensiblement parallèles entre elles et distantes l'une de l'autre, comprenant un élément élastiquement déformable, interposé parallèlement à l'âme entre les ailes d'immobilisation.

Cependant, si un tel élément de renfort permet effectivement d'augmenter la raideur des ailes, augmentant ainsi la résistance à l'arrachement de la fixation obtenue par l'insertion du profilé dans une gorge de forme complémentaire, il présente, toutefois, l'inconvénient de nécessiter un effort particulièrement important lors de l'insertion du profilé dans sa gorge. Or, cet effort peut s'avérer rédhibitoire.

Ainsi, il apparaît le besoin de disposer d'un nouveau profilé qui, tout en présentant une résistante à l'arrachement supérieure à celle d'un profilé, tel que décrit dans la demande EP 0 326 487, n'offre pas une résistance à l'insertion trop importante. Il s'agit, en effet, d'offrir un compromis satisfaisant entre la résistance à l'arrachement et la résistance à l'insertion.

A cet effet, l'invention concerne un profilé pour l'immobilisation d'une toile, bâche ou analogue dans une gorge d'une structure porteuse, profilé comprenant une âme à partir de laquelle s'étendent au moins deux ailes élastiquement déformables, sensiblement parallèles entre elles et distantes l'une de l'autre, ainsi que des moyens de renfort élastiquement déformables interposés entre les ailes.

Selon l'invention, les moyens de renfort comprennent au moins une entretoise arquée reliant les deux ailes. Ainsi, cette forme arquée de l'entretoise en favorise la flexion, de manière à réduire l'effort d'insertion du profilé, tout en préservant la fonction de renfort des ailes.

La concavité de l'entretoise se trouve orientée à l'opposé de l'âme.

Le profilé comprend des moyens de butée destinés à limiter la flexion de l'entretoise arquée.

Le profilé selon l'invention peut être réalisé de toute façon appropriée et, de manière préférée mais non strictement nécessaire, l'âme, les ailes et les moyens de renfort forment un ensemble monobloc, de sorte que le profilé selon l'invention constitue un tout unitaire. De manière préférée, le profilé est alors réalisé en matière plastique extrudée ou pultrudée au travers d'une filière.

Selon l'invention, l'entretoise arquée peut être conformée de différentes manières en fonction de la raideur recherchée.

De même, l'entretoise peut alors être reliée aux ailes à différents niveaux par rapport à l'âme du profilé en fonction de la raideur recherchée. Ainsi, selon une caractéristique de l'invention, l'entretoise relie les extrémités des ailes situées à l'opposée de l'âme.

Selon une autre caractéristique de l'invention, l'entretoise présente une forme en «V».

Les moyens de renfort peuvent comprendre une ou plusieurs entretoises. Ainsi, selon une caractéristique de l'invention, les moyens de renfort comprennent deux entretoises arquées qui s'étendent entre les deux ailes et dont les sommets sont disposés en regard.

De plus, dans cette configuration, les sommets en regard des entretoises viennent, à partir d'un certain rapprochement des ailes, en butée l'un contre l'autre pour interdire tout rapprochement supplémentaire des ailes.

Les moyens de butée peuvent être réalisés de toute façon appropriée et être, par exemple, formés par une deuxième entretoise, comme décrit précédemment. Selon une autre forme de réalisation, les moyens de butée sont constitués par un élément ou nervure saillant, à partir de l'âme du profilé, en direction de l'entrétoise.

Selon encore une autre forme de réalisation de l'invention, les moyens de butée sont formé par un élément saillant s'étendant à partir de l'entretoise pour venir en appui sur l'âme du profilé lors d'un rapprochement des ailes de ce dernier.

Selon encore une autre caractéristique de l'invention, afin de permettre un meilleur blocage du profilé dans sa gorge de réception, chaque aile présente, au voisinage de son extrémité opposée à l'âme et sur sa face extérieure, un relief ou une conformation convexe de blocage.

Selon une autre caractéristique de l'invention, la base de chaque aile est située à distance du bord le plus proche de l'âme du profilé.

Conformément à l'invention, l'âme du profilé peut présenter différentes formes en fonction de la structure porteuse et de la gorge dans laquelle elle devra être adaptée. Ainsi, l'âme peut présenter une forme arquée. Toutefois, selon une caractéristique préférée mais non strictement nécessaire de l'invention, l'âme du profilé est sensiblement plane et les ailes s'étendent perpendiculairement à cette dernière.

L'invention concerne, également, un panneau décoratif ou publicitaire comprenant:
■ une structure porteuse pourvue d'au moins une gorge périphérique,
■ une baguette disposée dans la gorge pour y immobiliser une toile, ou une bâche tendue,
caractérisé en ce que la baguette est constituée par le profilé décrit ci-dessus.

Diverses autres caractéristiques de l'invention ressortent de la description ci-dessous effectuée en référence aux dessins annexés qui illustrent différentes formes non limitatives de réalisation d'un profilé selon l'invention et d'un panneau décoratif ou publicitaire mettant en oeuvre un tel profilé.

La **fig. 1** est une perspective schématique partiellement coupée d'un panneau décoratif ou publicitaire mettant en oeuvre un profilé.

La **fig. 2** est une section droite transversale selon le plan **II-II** de la **fig.1** montrant une forme de réalisation d'un profilé.

Les **fig. 3** à **4** sont des coupes, analogues à la **fig. 2****,** montrant différentes formes de réalisation d'un profilé d'immobilisation selon l'invention.

La figure 5 est une coupe montrant une vue alternative qui ne fait pas partie de l'invention.

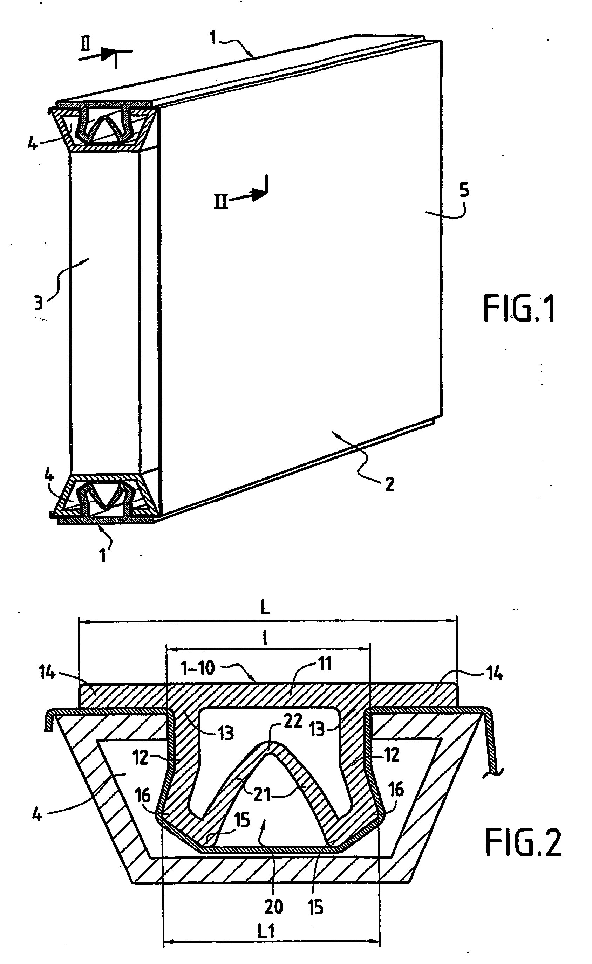

Un profilé selon l'invention est destiné à constituer une baguette **1** mise en oeuvre dans le cadre d'un panneau décoratif ou publicitaire, tel qu'illustré à la **fig. 1****,** et désigné dans son ensemble par la référence **2.**

Le panneau **2** comprend une structure porteuse **3** qui présente au moins une et, selon l'exemple illustré, exactement une gorge périphérique **4.** Le panneau **2** comprend en outre une toile ou bâche **5** qui se trouve pincée ou immobilisée dans la gorge **4** par la baguette **1.**

Afin d'assurer une fixation de la bâche **5** sur la structure porteuse **3,** qui offre une bonne résistance à l'arrachement lorsqu'un effort de traction est appliqué sur la bâche ou toile **5,** l'invention propose de réaliser la baguette **1** à partir d'un profilé **10,** tel qu'illustré, à plus grande échelle, à la **fig. 2****.**

Le profilé **10** comprend, comme le montre la section transversale, **fig. 2****,** une âme **11** à partir de laquelle s'étendent deux ailes **12** sensiblement parallèles entre elles. Selon l'exemple illustré, l'âme **11** est sensiblement plane et les ailes **12** s'étendent perpendiculairement à cette dernière. Comme cela ressort de **la** **fig. 2****,** les ailes **12** sont distantes l'une de l'autre et leur base **13** est située à distance du bord le plus proche **14** de l'âme **11.** Ainsi, l'âme **11** présente une largeur L supérieure à la largeur *l* de l'ouverture de la gorge **4** dans laquelle les deux ailes **12** sont destinées à être engagées simultanément. Afin d'éviter une extraction intempestive du profilé **10** hors de la gorge **4,** chaque aile **12** présente, au voisinage de son extrémité **15,** opposée à l'âme **11,** un relief ou une conformation convexe de blocage **16** aménagée sur la face extérieure de l'aile **12** correspondante. Ainsi, le profilé **10** présente, au niveau des conformations **16,** une largeur L₁ supérieure à la largeur *l* de l'ouverture de la gorge **4.**

Conformément à une caractéristique essentielle de l'invention, afin d'augmenter la raideur des ailes élastiquement déformables **12** face à une contrainte qui leur serait appliquée dans le sens d'un rapprochement des deux ailes **12.** Le profilé **10** comprend, en outre, des moyens de renfort **20** élastiquement déformables, interposés entre les ailes d'immobilisation **12** et comprenant au moins une entretoise arquée **21** interposée entre les ailes **12.**

L'entretoise arquée **21** peut, bien entendu, être réalisée de toute façon appropriée. Selon l'exemple illustré, l'entretoise **21** présente une forme en « V » et relie chacune des extrémités **15** des ailes **12.** Comme le montre la **fig. 2****,** la pointe **22** du « V », définie par l'entretoise **21** constitutive des moyens de renfort **20,** est, de préférence, orientée vers l'âme **11** du profilé **10.**

Le profilé **10** ainsi constitué peut être réalisé de toute façon et en tout matériau approprié. De manière préférée mais non strictement nécessaire, le profilé **10** est réalisé en matière plastique, telle que, par exemple mais non exclusivement, du PVC extrudé. L'âme **11,** les ailes **12** et les moyens de renfort **20** forment alors un ensemble monobloc ou unitaire qui présente un faible coût de revient, tout en offrant des caractéristiques mécaniques particulièrement satisfaisantes.

Le profilé ainsi constitué est mis en oeuvre de la manière suivante. La toile **5** est placée sur la structure porteuse **3,** de manière à recouvrir l'ouverture de la gorge périphérique **4.** Ensuite, la baguette **1,** réalisée à partir d'un ou plusieurs tronçons de profilés **10** est engagée à force dans la gorge **4,** de manière à pincer la toile **5,** entre les bords de l'ouverture de la gorge **4** et les ailes **12.** La raideur supplémentaire, offerte par les moyens de renfort **20,** assure alors un bon pincement de la toile **5** entre la baguette **1** et les rebords de la gorge 4. De plus, la forme arquée de l'entretoise favorise sa flexion et permet alors un rapprochement des ailes **12** lors de l'introduction du profilé **10** dans la gorge **4.** Ainsi, l'entretoise 21 augmente la raideur des ailes 12 sans toutefois interdire complètement leur rapprochement.

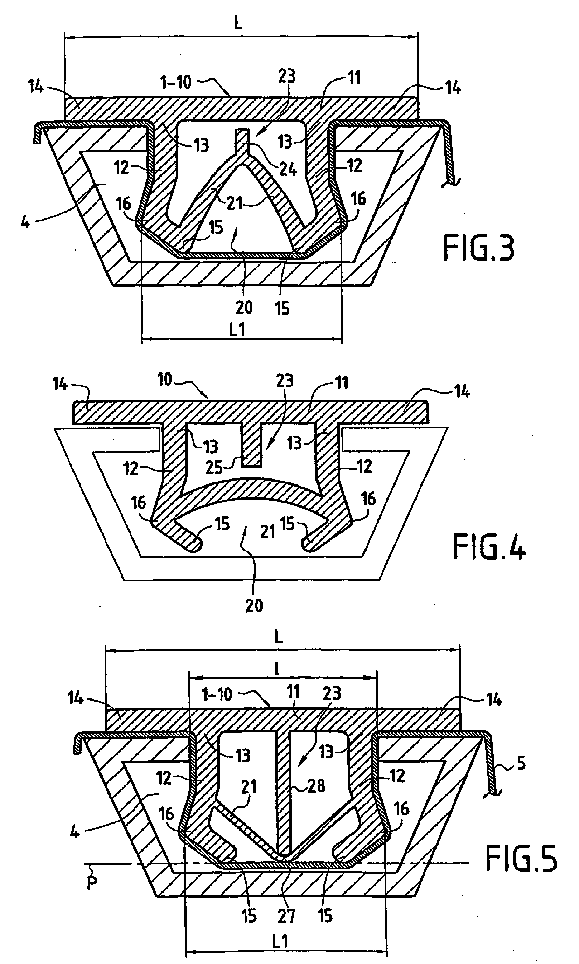

La **fig. 3** illustre une variante de réalisation du profilé **10,** tel qu'illustré à la **Fig. 2**, conforme à l'invention et selon laquelle le profilé **10** comprend des moyens de butée **23** destinés à limiter les mouvements de l'entretoise **21** dans un sens ou dans un autre.

Selon l'exemple illustré à la **fig. 3****,** les moyens de butée **23** sont conçus pour s'opposer à la flexion de l'entretoise **21** à partir d'une certaine valeur de rapprochement des ailes **12.** Ainsi, les moyens de butée **23** comprennent un élément de nervure saillant **24,** s'étendant à partir du sommet de l'entretoise **21,** en direction de l'âme **11.** Ainsi, lors du rapprochement des ailes **12,** la nervure saillante **24** vient en butée contre l'âme **11** et bloque la flexion de l'entretoise **21.**

De plus, la présence de la nervure **24** permet, lorsque l'entretoise est engagée, de s'assurer du parfait écartement des ailes **12** en venant taper, au moyen d'un maillet, sur le dos de l'âme **11.**

Selon l'invention, les moyens de butée **23** ne sont pas nécessairement solidaires de l'entretoise **21.**

Ainsi, la **fig. 4** illustre une autre forme de réalisation selon laquelle les moyens de butée **23** comprennent une nervure saillante **25** solidaire de l'âme et s'étendant en direction du sommet de l'entretoise **21.**

Il est à noter que, selon cet exemple, l'entretoise arquée **21** ne présente pas une forme en « V », mais une forme en arc de cercle.

La **fig. 5** illustre encore une autre forme de réalisation d'un profilé qui ne fait pas partie de l'invention. Selon cet exemple, les moyens de renfort **20** comprennent une entretoise arquée **21** dont la concavité est orientée vers l'âme **11** et dont le sommet **27** est disposé de manière à se trouver en position de repos du profilé, sensiblement dans le plan **P** défini par les extrémités **15** des ailes **12** ou, encore, au-delà du plan **P** par rapport à l'âme **11.**

Cette disposition permet, en position de montage, telle qu'illustrée à la **fig. 5****,** à la toile **5** d'exercer une pression sur le sommet **27** dans le sens d'un écartement des ailes **12** contribuant ainsi à une parfaite immobilisation du profilé **10** dans la gorge **4.**

Selon cet exemple, le profilé **10** comprend, en outre, bien que cela ne soit pas strictement nécessaire, des moyens de butée **23** constitués par une nervure **28** s'étendant à partir de l'âme **11** vers l'entretoise **21.** Cette nervure **28** permet, d'une part, en position de montage, telle qu'illustrée **fig. 5** et en association avec la toile 5, de limiter les mouvements de flexion de l'entretoise **21** et donc de verrouiller la position des ailes **12**. D'autre part, il est possible, grâce à la nervure **28** lors de l'engagement du profilé **10** dans la gorge **4** d'assurer un rapprochement des ailes **12** en tapant avec un maillet sur le dos de l'âme **11.**

En effet, compte tenu de l'élasticité de l'âme **11,** le choc appliqué sur l'âme **11** déplace la nervure **28** en direction du creux de l'entretoise **21** qui se plie, rapprochant ainsi les ailes **12.** Cette disposition avantageuse contribue à faciliter l'insertion du profilé dans la gorge.

Bien entendu, les moyens de butée **23** pourraient ne pas être constitués par une nervure seule mais par deux nervures s'étendant l'une à partir de l'âme et l'autre à partir de l'entretoise et destinées à venir, par exemple, en appui l'une sur l'autre.

## Revendications

1. Profilé pour l'immobilisation d'une toile, bâche ou analogue dans une gorge d'une structure porteuse, profilé comprenant une âme **(11)** à partir de laquelle s'étendent au moins deux ailes **(12)** élastiquement déformables, sensiblement parallèles entre elles et distantes l'une de l'autre et des moyens de renfort **(20)** élastiquement déformables interposés entre les ailes **(12),**
**caractérisé en ce que** les moyens de renfort **(20)** comprennent au moins une entretoise arquée **(21)** reliant les deux ailes **(12),** la concavité de l'entretoise **(21)** étant orientée à l'opposé de l'âme, et **en ce qu'**il comprend des moyens de butée **(23)** destinés à limiter les mouvements de l'entretoise **(21).**

2. Profilé selon la revendication 1, **caractérisé en ce que** les moyens de butée **(23)** comprennent au moins une nervure **(24)** solidaire de l'entretoise **(21)** s'étendant en direction de l'âme **(11).**

3. Profilé selon la revendication 1 ou 2, **caractérisé en ce que** les moyens de butée (23) comprennent au moins une nervure **(25, 28),** solidaire de l'âme **(11),** s'étendant en direction de l'entretoise **(21).**

4. Profilé selon l'une des revendications 1 à 3, **caractérisé en ce que** l'entretoise arquée **(21)** présente une forme en « V ».

5. Profilé selon l'une des revendications 1 à 4, **caractérisé en ce que** l'âme **(11),** les ailes **(12)** et l'entretoise arquée **(21)** forment un ensemble monobloc.

6. Profilé selon l'une des revendications 1 à 5, **caractérisé en ce que** l'entretoise **(21)** relie les extrémités **(15)** des ailes **(12)** situées à l'opposé de l'âme **(11).**

7. Profilé selon l'une des revendications 1 à 5, **caractérisé en ce que** la base **(13)** de chaque aile **(12)** est située à distance du bord le plus proche **(14)** de l'âme du profilé **(11).**

8. Profilé selon l'une des revendications 1 à 7, **caractérisé en ce que** chaque aile (12) présente, au voisinage de son extrémité **(15)** opposée à l'âme **(11)** et sur sa face extérieure, une conformation convexe de blocage **(16).**

9. Profilé selon l'une des revendications 1 à 8, **caractérisé en ce que** l'âme **(11)** est sensiblement plane.

10. Panneau décoratif ou publicitaire comprenant :
■ une structure porteuse **(3)** pourvue d'au moins une gorge périphérique **(4),**
■ une baguette **(1)** disposée dans la gorge **(4)** pour y immobiliser une toile ou une bâche **(5)** tendue,
**caractérisé en ce que** la baguette **(1)** est constituée par un profilé selon l'une des revendications 1 à 9.

## Claims

1. A profile for immobilizing a canvas, a tarpaulin or the like, in a groove of a bearing structure, a profile comprising a core (11) from which at least two elastically deformable wings (12) extend substantially parallel to each other and apart from each other and elastically deformable strengthening means (20) interposed between the wings (12),
**characterized in that** the strengthening means (20) comprise at least one arched spacer (21) connecting both wings (12), the concavity of the spacer (21) being oriented opposite to the core, and **in that** it comprises abutment means (23) intended to limit the movements of the spacer (21).

2. The profile according to claim 1, **characterized in that** the abutment means (23) comprise at least one rib (24) integral with the spacer (21) extending towards the core (11).

3. The profile according to claim 1 or 2, **characterized in that** the abutment means (23) comprise at least one rib (25, 28) integral with the core (11), extending towards the spacer (21).

4. The profile according to any of claims 1 to 3, **characterized in that** arched-spacer (21) has a V-shape.

5. The profile according to any of claims 1 to 4, **characterized in that** the core (11), the wings (12) and the arched spacer (21) form a single-piece assembly.

6. The profile according to any of claims 1 to 5, **characterized in that** the spacer (21) connects the ends (15) of the wings (12) located opposite the core (11).

7. The profile according to any of claims 1 to 5, **characterized in that** the base (13) of each wing (12) is located at a distance from the closest edge (14) of the core of the profile (11).

8. The profile according to any of claims 1 to 7, **characterized in that** each wing (12) has in the vicinity of its end (15) opposite to the core (11) and on its outer face, a convex blocking conformation (16).

9. The profile according to any of claims 1 to 8, **characterized in that** the core (11) is substantially planar.

10. A decorative or advertising panel comprising:
■ a bearing structure (3) provided with at least one peripheral groove (4),
■ a rod (1) positioned in the groove (4) for immobilizing a canvas or a tensioned tarpaulin (5) therein,
**characterized in that** the rod (1) is formed by a profile according to any of claims 1 to 9.

## Patentansprüche

1. Profil zur Festlegung einer Leinwand, Plane oder ähnlichem in einer Nut einer Tragstruktur, Profil, das einen Kern (11), von dem aus sich wenigstens zwei elastisch verformbare, im wesentlichen parallel zueinander verlaufende und voneinander beabstandete Schenkel (12) erstrecken, sowie elastisch verformbare, zwischen den Schenkeln (12) eingefügte Verstärkungsmittel (20) umfaßt, **dadurch gekennzeichnet, daß** die Verstärkungsmittel (20) wenigstens einen bogenförmigen Steg (21) aufweisen, welcher die beiden Schenkel (12) verbindet, wobei die Konkavität des Stegs (21) von dem Kern weggerichtet ist, und daß es Anschlagmittel (23) aufweist, die dazu bestimmt sind, die Bewegungen des Stegs (21) zu begrenzen.

2. Profil nach Anspruch 1, **dadurch gekennzeichnet, daß** die Anschlagmittel (23) wenigstens eine mit dem Steg (21) fest verbundene Rippe (24) aufweisen, die sich in Richtung des Kerns (11) erstreckt.

3. Profil nach Anspruch 1 oder 2, **dadurch gekennzeichnet, daß** die Anschlagmittel (23) wenigstens eine mit dem Kern (11) fest verbundene Rippe (25, 28) aufweisen, die sich in Richtung des Stegs (21) erstreckt.

4. Profil nach einem der Ansprüche 1 bis 3, **dadurch gekennzeichnet, daß** der bogenförmige Steg (21) V-förmig ausgebildet ist.

5. Profil nach einem der Ansprüche 1 bis 4, **dadurch gekennzeichnet, daß** der Kern (11), die Schenkel (12) und der bogenförmige Steg (21) ein aus einem Stück bestehendes Ganzes bilden.

6. Profil nach einem der Ansprüche 1 bis 5, **dadurch gekennzeichnet, daß** der Steg (21) die dem Kern (11) gegenüberliegenden Enden (15) der Schenkel (12) verbindet.

7. Profil nach einem der Ansprüche 1 bis 5, **dadurch gekennzeichnet, daß** die Basis (13) eines jeden Schenkels (12) von dem am nächsten gelegenen Rand (14) des Kerns (11) des Profis beabstandet ist.

8. Profil nach einem der Ansprüche 1 bis 7, **dadurch gekennzeichnet, daß** jeder Schenkel (12) in der Nähe seines dem Kern (11) gegenüberliegenden Endes (15) sowie an seiner Außenseite eine konvexe Blockierformung (16) aufweist.

9. Profil nach einem der Ansprüche 1 bis 8, **dadurch gekennzeichnet, daß** der Kern (11) im wesentlichen eben ist.

10. Dekorations- oder Werbetafel, die folgendes aufweist:
- eine Tragstruktur (3), die mit wenigstens einer Umfangsnut (4) versehen ist,
- eine Leiste (1), die in der Nut (4) angeordnet ist, um eine gespannte Leinwand oder Plane (5) darin festzulegen, **dadurch gekennzeichnet, daß** die Leiste (1) von einem Profil nach einem der Ansprüche 1 bis 9 gebildet ist.
